(19) **Europäisches Patentamt**
**European Patent Office**
**Office européen des brevets**

(11) **EP 4 451 570 A1**

(12) **EUROPEAN PATENT APPLICATION**

(43) Date of publication:
**23.10.2024 Bulletin 2024/43**

(21) Application number: **23305597.9**

(22) Date of filing: **18.04.2023**

(51) International Patent Classification (IPC):
**H04B 1/10** $^{(2006.01)}$        **H04L 27/26** $^{(2006.01)}$

(52) Cooperative Patent Classification (CPC):
**H04B 1/1027**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Mitsubishi Electric R&D Centre Europe B.V.**
  **1119 NS  Schiphol Rijk Amsterdam (NL)**
  Designated Contracting States:
  **FR**
• **MITSUBISHI ELECTRIC CORPORATION**
  **Chiyoda-ku**
  **Tokyo 100-8310 (JP)**
  Designated Contracting States:
  **AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **SIBEL, Jean-Christophe**
  **35708 RENNES CEDEX 7 (FR)**
• **CORLAY, Vincent**
  **35708 RENNES CEDEX 7 (FR)**
• **BECHIHI, Adel**
  **35708 RENNES CEDEX 7 (FR)**

(74) Representative: **Plasseraud IP**
  **104 Rue de Richelieu**
  **CS92104**
  **75080 Paris Cedex 02 (FR)**

(54) **WIRELESS COMMUNICATION METHODS AND SYSTEM FOR PHASE NOISE MITIGATION**

(57)    The present disclosure relates to a wireless communication method (50), implemented by a terminal (20) in a wireless communication system (10), for exchanging data with a radio access network (11) of said wireless communication system, said method comprising:
- (S50) determining a phase noise temporal coherence indicator representative of a temporal coherence of a phase noise affecting baseband signals obtained from radiofrequency signals received by the terminal,
- (S51) transmitting said phase noise temporal coherence indicator to said radio access network (11) of the wireless communication system.

Fig. 5

**Description**

**TECHNICAL FIELD**

The present disclosure relates to wireless communication systems and relates more specifically to wireless communication methods enabling to improve the mitigation of phase noise.

**BACKGROUND ART**

Phase noise is a physical phenomenon that occurs because of instabilities in the local oscillators of any wireless communication equipment, e.g. in base stations and in terminals (a.k.a. user equipment) of a wireless communication system.

In a wireless communication between a transmitter (e.g. a base station) and a receiver (e.g. a terminal), phase noise is introduced at both the transmitter side (when e.g. frequency translating, by means of one or more local oscillators, a baseband signal from a baseband frequency to a carrier frequency) and the receiver side (when e.g. frequency translating, by means of one or more local oscillators, a radiofrequency signal from a carrier frequency to a baseband frequency). The characteristics of the phase noise introduced depends on the respective characteristics of each local oscillator involved such that, for a same base station, the phase noise characteristics may vary when communicating with different terminals, since each terminal will use its own local oscillators with their own characteristics. Also, the amount of phase noise introduced at a terminal is usually more important than the amount of phase noise introduced at a base station, because a base station may usually be equipped with more efficient local oscillators than terminals.

Usually, the phase noise affecting data signals may be estimated at the receiver side by inserting pilot signals at the transmitter side. Since the pilot signals are known to both the transmitter and the receiver, the receiver can estimate the phase noise affecting the received pilot signals and use the phase noise estimated for the pilot signals to predict and correct the phase noise affecting the data signals.

The phase noise increases as the carrier frequency used to exchange radiofrequency signals increases. Next generation wireless communication systems target sub-terahertz carrier frequencies (e.g. below 300 gigahertz) and terahertz (THz) carrier frequencies (-1000 gigahertz) that are greater than the carrier frequencies used in current wireless communication systems. This increase in the carrier frequencies opens the room for considering higher data rates. However, it is also accompanied by an increase of the phase noise impact on the wireless communication performance, which might require increasing the number of pilot signals required for phase noise estimation, thereby limiting the achievable data rate for data signals.

**SUMMARY**

The present disclosure aims at improving the situation. In particular, the present disclosure aims at addressing at least in part some or all of the limitations of the prior art discussed above, by proposing a solution enabling to reduce, in some cases at least, the amount of pilot signals required for phase estimation, by taking into account phase noise specificities of each terminal with which a base station is to exchange data.

For this purpose, and according to a first aspect, the present disclosure relates to a wireless communication method, implemented by a terminal in a wireless communication system, for exchanging data with a radio access network of said wireless communication system, said method comprising:

- determining a phase noise temporal coherence indicator representative of a temporal coherence of a phase noise affecting baseband signals obtained from radiofrequency signals received by the terminal,
- transmitting said phase noise temporal coherence indicator to said radio access network of the wireless communication system.

Hence, the terminal evaluates the temporal coherence of the phase noise affecting the received baseband signals which, in most cases (at least when communicating with a base station) is introduced mainly by the local oscillators of the considered terminal. The temporal coherence of the phase noise is typically the measure of the mean correlation between the phase noises introduced at times separated by a given delay, evaluated for different delays (a.k.a. phase noise autocorrelation function). The temporal coherence therefore measures, on the average, how fast the phase noise introduced is expected to vary over time. The terminal determines a phase noise temporal coherence indicator which is representative of the temporal coherence and therefore indicates how fast the phase noise introduced is expected to vary over time. Depending on the embodiments, the phase noise temporal coherence indicator may correspond to e.g. an estimated phase noise autocorrelation function (or an information derived therefrom such as its initial slope, its floor limit, its average value, etc.), a binary value indicating if the variation of the phase noise is fast or slow, etc.

The phase noise temporal coherence indicator is then transmitted to the radio access network. For instance, the phase noise temporal coherence indicator may be transmitted, directly or indirectly, to a base station with which the terminal needs to exchange data. The phase noise temporal coherence indicator may also be stored in a database where it can be retrieved, when required, by a base station which needs to exchange data with the terminal.

As discussed above, the phase noise depends on the used carrier frequency, such that the phase noise temporal coherence indicator is representative of the temporal coherence of the phase noise introduced for the considered carrier frequency, over which the base station and the terminal are to exchange data. Hence, the phase noise temporal coherence indicator depends on the considered carrier frequency, and may be different if data is to be exchanged over a millimeter wave carrier frequency or if data is to be exchanged over a (sub-)THz carrier frequency, etc.

Reporting the phase noise temporal coherence indicator determined by the terminal to the radio access network is advantageous in that it enables to adjust the behavior of a base station to characteristics of the phase noise affecting the communication between the base station and the terminal and, in fine, to improve the wireless communication performance. For instance, on the uplink from the terminal to the base station, the base station may adjust parameters of the phase noise estimation and correction based on whether the phase noise introduced is expected to vary slowly or quickly, e.g. to ensure that the mean phase noise estimation error remains below a predetermined threshold regardless the phase noise temporal coherence. On the downlink from the base station to the terminal, the base station may for instance use the received phase noise temporal coherence indicator to adjust the design of the pilot signals inserted for phase noise estimation, e.g. by adjusting the temporal spacing between pilot signals based on whether the phase noise introduced is expected to vary slowly or quickly (e.g. by considering greater temporal spacings if the phase noise is expected to vary slowly than if the phase noise is expected to vary quickly).

In specific embodiments, the wireless communication method according to the first aspect can further comprise one or more of the following optional features, considered either alone or in any technically possible combination.

In specific embodiments, determining the phase noise temporal coherence indicator comprises estimating a phase noise autocorrelation function of the phase noise based on signals received from at least one base station of the radio access network, and the phase noise temporal coherence indicator corresponds to the estimated phase noise autocorrelation function or is determined based on said estimated phase noise autocorrelation function.

In specific embodiments, the phase noise temporal coherence indicator is representative of at least one among the following:

- an initial slope of the estimated phase noise autocorrelation function,
- a binary value indicating a variation speed of the phase noise,
- a duration past which the phase noise coherence becomes lower than a threshold,
- a value of the estimated phase noise autocorrelation function for a predefined delay,
- a floor limit which the estimated phase noise autocorrelation function tends to,
- an average value of the estimated phase noise autocorrelation function.

In specific embodiments, determining the phase noise temporal coherence indicator comprises retrieving calibration data stored in a non-volatile memory of the terminal, and the phase noise temporal coherence indicator corresponds to the calibration data or is determined based on said calibration data.

According to a second aspect, the present disclosure relates to a computer program product comprising instructions which, when executed by at least one processor, configure said at least one processor to carry out a wireless communication method according to any one of the embodiments of the first aspect.

According to a third aspect, the present disclosure relates to a terminal in a wireless communication system, said terminal comprising a processing circuit and a wireless communication unit which are configured to carry out a wireless communication method according to any one of the embodiments of the first aspect.

According to a fourth aspect, the present disclosure relates to a wireless communication method, implemented by a base station in a wireless communication system, for exchanging data with a terminal of said wireless communication system, said method comprising:

- determining a phase noise temporal coherence indicator for the terminal, representative of a temporal coherence of a phase noise affecting baseband signals obtained from radiofrequency signals received by said terminal,
- determining, for said terminal and based on the determined phase noise temporal coherence indicator, a temporal spacing for pilot signals to be transmitted by the base station to said terminal,
- transmitting signals to the terminal, said signals including data signals and pilot signals, said pilot signals being temporally spaced apart based on the temporal spacing determined for said terminal.

In specific embodiments, the wireless communication method according to the fourth aspect can further comprise one or more of the following optional features, considered either alone or in any technically possible combination.

In specific embodiments, determining the phase noise temporal coherence indicator for the terminal comprises one among the following:

- receiving from said terminal the phase noise temporal coherence indicator transmitted according to any one of the embodiments of the first aspect,
- estimating the phase noise temporal coherence indicator for said terminal based on signals received from said terminal,
- retrieving, from a database, the phase noise temporal coherence indicator for said terminal.

In specific embodiments, the temporal spacing is adjusted to the temporal coherence of the phase noise of the terminal, by selecting a temporal spacing that is lower in response to the determined phase noise temporal coherence indicator indicating a short coherence time than in response to the determined phase noise temporal coherence indicator indicating a large coherence time. Basically, "large" and "short" are to be understood relatively one to the other, and a phase noise with a short coherence time is therefore expected to vary faster than a phase noise with a large coherence time, i.e. the temporal spacing increases (with strict or non-strict monotonicity) with the coherence time of the phase noise. The coherence time corresponds for instance to the delay past which the mean correlation between the introduced phase noises becomes lower than a predetermined threshold.

In specific embodiments, the temporal spacing is determined by using a predetermined performance function representative of a phase noise estimation performance at the terminal, as a function of the temporal spacing between the pilot signals. In specific embodiments, the determination of the temporal spacing is carried out by determining the greatest temporal spacing for which the phase noise estimation performance satisfies a minimum phase noise performance requirement.

In specific embodiments, the determination of the temporal spacing is carried out by considering a minimum temporal spacing allowed for spacing apart the pilot signals and/or a maximum temporal spacing allowed for spacing apart the pilot signals.

In specific embodiments, the performance function is representative of a phase noise estimation performance when performing finite impulse response, FIR, minimum mean square error, MMSE phase noise estimation at the terminal.

In specific embodiments, a look-up table, LUT, is stored in a non-volatile memory of the base station, said LUT comprising different temporal spacings associated to respective different phase noise temporal coherence indicators, and determining the temporal spacing for the terminal comprises retrieving from the LUT the temporal spacing associated to the phase noise temporal coherence indicator determined for the terminal.

According to a fifth aspect, the present disclosure relates to a computer program product comprising instructions which, when executed by at least one processor, configure said at least one processor to carry out a wireless communication method according to any one of the embodiments of the fourth aspect.

According to a sixth aspect, the present disclosure relates to a base station in a wireless communication system, said base station comprising a processing circuit and a wireless communication unit which are configured to carry out a wireless communication method according to any one of the embodiments of the fourth aspect.

According to a seventh aspect, the present disclosure relates to a wireless communication system comprising at least one terminal according to any one of the embodiments of the present disclosure and at least one base station according to any one of the embodiments of the present disclosure.

In specific embodiments, the wireless communication system uses discrete Fourier transform-spread orthogonal frequency division multiplexing, DFT-s-OFDM.

## BRIEF DESCRIPTION OF DRAWINGS

The invention will be better understood upon reading the following description, given as an example that is in no way limiting, and made in reference to the figures which show:

- Figure 1: a schematic representation of a wireless communication system,
- Figure 2: a schematic representation of an exemplary embodiment of a terminal of the wireless communication system,
- Figure 3: a schematic representation of an exemplary embodiment of a base station of the wireless communication system,
- Figure 4: plots representing examples of phase noise autocorrelation functions of a terminal and a base station,
- Figure 5: a diagram representing the main steps of an exemplary embodiment of a wireless communication method implemented by e.g. a terminal,
- Figure 6: a diagram representing the main steps of an exemplary embodiment of a wireless communication method implemented by e.g. a base station,

- Figure 7: plots representing examples of performance functions that can be used to adjust a temporal spacing between pilot signals in the wireless communication method of figure 6.

In these figures, references identical from one figure to another designate identical or analogous elements. For reasons of clarity, the elements shown are not to scale, unless explicitly stated otherwise.

Also, the order of steps represented in these figures is provided only for illustration purposes and is not meant to limit the present disclosure which may be applied with the same steps executed in a different order.

## DESCRIPTION OF EMBODIMENTS

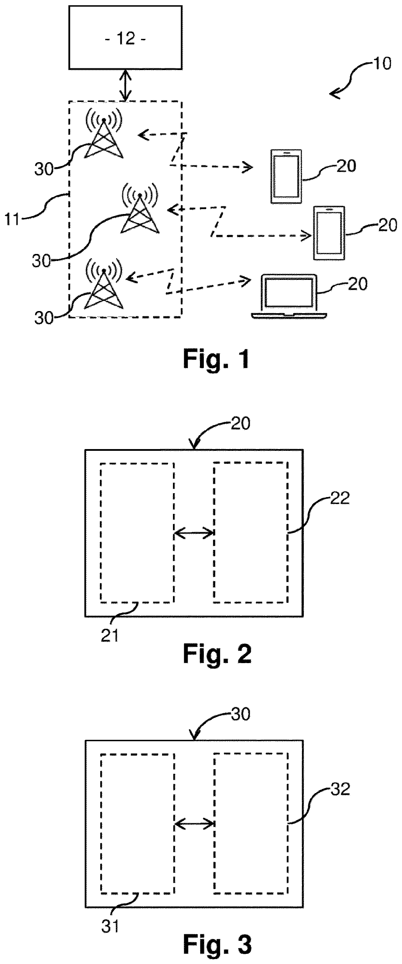

Figure 1 represents schematically an exemplary embodiment of a wireless communication system 10. As illustrated by figure 1, the wireless communication system 10 comprises one or more terminals 20 (a.k.a. user equipment) and a radio access network, RAN, 11. The RAN 11 comprises one or more base stations 30. The terminals 20 are adapted to exchange data with the base stations 30 of the RAN 11 via wireless links established with said base stations 30. The RAN 11 is adapted to exchange data with a core network, CN, 12, in order to forward data received from terminals 20 to the CN 12 and to receive data from the CN 12 that is to be forwarded to terminals 20.

Figure 2 represents schematically an exemplary embodiment of a terminal 20. In this exemplary embodiment, the terminal 20 comprises a processing circuit 21. For instance, the processing circuit 21 comprises one or more processors and one or more memories. The one or more processors may include for instance a central processing unit (CPU), a digital signal processor (DSP), a field-programmable gate array (FPGA), an application specific integrated circuit (ASIC), etc. The one or more memories may include any type of computer readable volatile and non-volatile memories (magnetic hard disk, solid-state disk, optical disk, electronic memory, etc.). The one or more memories may store a computer program product, in the form of a set of program-code instructions to be executed by the one or more processors in order to implement all or part of the steps of a wireless communication method 50.

The terminal 20 comprises also a wireless communication unit 22, coupled to the processing circuit 21, allowing said terminal 20 to exchange data on wireless links with the RAN 11, in the form of radiofrequency signals. The wireless communication unit 22 includes for instance a radiofrequency circuit comprising components (antenna(s), amplifier(s), local oscillator(s), mixer(s), analog and/or digital filter(s), etc.) considered known to the skilled person.

In other words, the processing circuit 21 and the wireless communication unit 22 of the terminal 20 form a set of means configured by software (specific computer program product) and/or by hardware (CPU, DSP, FPGA, ASIC, discrete electronic components, radiofrequency circuit, etc.) to implement all or part of the steps of the wireless communication method 50 which will be discussed hereinafter. Of course, the terminal 20 may also, in some cases, comprise other components which are not represented in the figures and not detailed herein.

Figure 3 represents schematically an exemplary embodiment of a base station 30. In this exemplary embodiment, the base station 30 comprises a processing circuit 31. For instance, the processing circuit 31 comprises one or more processors and one or more memories. The one or more processors may include for instance a CPU, a DSP, an FPGA, an ASIC, etc. The one or more memories may include any type of computer readable volatile and non-volatile memories (magnetic hard disk, solid-state disk, optical disk, electronic memory, etc.). The one or more memories may store a computer program product, in the form of a set of program-code instructions to be executed by the one or more processors in order to implement all or part of the steps of a wireless communication method 60.

The base station 30 comprises also a wireless communication unit 32, coupled to the processing circuit 31, allowing said base station 30 to exchange data on wireless links with terminals 20, in the form of radiofrequency signals. The wireless communication unit 32 includes for instance a radiofrequency circuit comprising components considered known to the skilled person.

In other words, the processing circuit 31 and the wireless communication unit 32 of the base station 30 form a set of means configured by software (specific computer program product) and/or by hardware (CPU, DSP, FPGA, ASIC, discrete electronic components, radiofrequency circuit, etc.) to implement all or part of the steps of the wireless communication method 60 which will be discussed hereinafter. Of course, the base station 30 may also, in some cases, comprise other components which are not represented in the figures and not detailed herein. In particular, the base station 30 may include a communication unit for exchanging data with the CN 12.

The wireless communication units 22, 32 of respectively the terminal 20 and the base station 30 implement one or more wireless communication protocols, for instance Wi-Fi and/or Bluetooth wireless communication protocols, and/or cellular communication protocols such as 3G, 4G, 5G, etc. Depending on the embodiments, the wireless communication system 10 may correspond to a wireless local area network, WLAN, or to a wireless wide area network, WWAN, etc. In some embodiments, the wireless communication system 10 relies at least in part on an orthogonal frequency division multiplexing, OFDM and/or on a discrete Fourier transform-spread OFDM, DFT-s-OFDM.

As discussed above, in a wireless communication between a transmitter (e.g. a base station 30) and a receiver (e.g. a terminal 20), phase noise is introduced at both the transmitter side (when e.g. frequency translating, by means of one or more local oscillators, a baseband signal from a baseband frequency to a carrier frequency) and the receiver side (when e.g. frequency translating, by means of one or more local oscillators, a radiofrequency signal from a carrier frequency to a baseband frequency). The characteristics of the phase noise introduced depend on the respective characteristics of each local oscillator involved such that, for a same base station 30, the phase noise characteristics may vary when communicating with different terminals 20, since each terminal 20 will use its own local oscillators with their own characteristics. Also, the amount of phase noise introduced at a terminal 20 is usually more important than the amount of phase noise introduced at a base station 30, because a base station 30 is usually equipped with more efficient local oscillators.

In the following, we consider in a non-limitative manner the case of a phase noise mitigation in a downlink, DL, wireless communication, i.e. from the base station 30 to the terminal 20. However, the present disclosure may also be applied for phase noise mitigation in an uplink, UL, wireless communication, i.e. from the terminal 20 to the base station 30.

At the terminal 20, the baseband signal obtained after frequency translating the received radiofrequency signal may be expressed in time-domain as successive signals / samples :

$$y_n = \psi_n x_n + z_n$$

wherein:

- $y_n$ corresponds to the $n^{th}$ received time-domain signal,
- $x_n$ corresponds to the $n^{th}$ transmitted time-domain signal,
- $z_n$ corresponds to an additive noise, which may be e.g. a zero-mean additive white gaussian noise, AWGN,
- $\psi_n = e^{i\phi n}$, with $\phi_n \in [-\pi, \pi]$, corresponds to the combined phase noise introduced by both the base station 30 and the terminal 20.

For instance, if we consider a DFT-s OFDM wireless communication system 10, then a time-domain OFDM symbol $\underline{x} = [x_1 \dots x_N]$ of length $N$ is spread by a discrete Fourier transform, DFT, $F_N$, thereby producing a DFT-spread OFDM symbol $\underline{X} = [X_1 \dots X_N] = F_N \underline{x}$. The DFT-spread OFDM symbol $\underline{X}$ is then mapped onto different subcarriers and converted to time-domain by e.g. an inverse fast Fourier transform, IFFT, of size $M > N$, and then converted to a radiofrequency signal transmitted to the terminal 20.

For instance, the phase noise may be characterized by its 2nd order statistics, e.g. by an autocorrelation function $\underline{\gamma} = [\gamma(0) \dots \gamma(N-1)]$ with:

$$\gamma(p) = \mathbb{E}\left[\psi_n \psi_{n-p}^{\ *}\right]$$

- $\mathbb{E}[\cdot]$ corresponds to the expectation,
- $p$ denotes a delay between phase noise components.

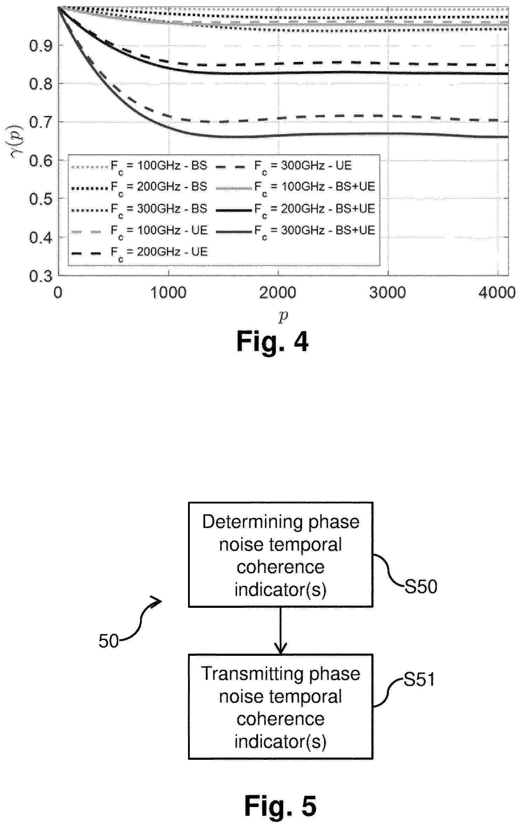

Figure 4 represents schematically different phase noise autocorrelation functions obtained for different carrier frequencies $F_C$ (respectively 100 GHz, 200 GHz and 300 GHz), for a base station 30 (referred to as "BS") and a terminal 20 (referred to as "UE"), by considering the phase noise simulation model as defined by the 3rd Generation Partnership Project (3GPP) in the technical recommendation TR 38.803 V14.3.0. Such phase noise autocorrelation functions are representative of the temporal coherence of the phase noise, i.e. representative of how fast the phase noise introduced is expected to vary over time. As can be seen, the terminal 20 typically introduces a phase noise that varies faster over time than the phase noise introduced by the base station 30. Also, the phase noise introduced generally varies faster over time as the carrier frequency increases. It should be noted also that, in practice, the phase noise autocorrelation function may significantly vary from one terminal 20 to another.

Figure 5 represents schematically the main steps of an exemplary embodiment of a wireless communication method 50 implemented by a terminal 20. The wireless communication method 50 of figure 5 introduces support tools which enable to generally improve phase noise mitigation and wireless communication performance between the RAN 11 and the terminal 20.

As illustrated by figure 5, the wireless communication method 50 comprises:

- a step S50 of determining, by the processing circuit 21 of the terminal 20, a phase noise temporal coherence indicator representative of the temporal coherence of a phase noise affecting baseband signals obtained from radiofrequency signals received by the wireless communication unit 22 of the terminal 20,
- a step S51 of transmitting, by the wireless communication unit 22 of the terminal 20, said phase noise temporal coherence indicator to the RAN 11 of the wireless communication system 10.

Hence, the terminal 20 evaluates the temporal coherence of the phase noise affecting the received baseband signals and sends a phase noise temporal coherence indicator to the RAN 11. Since the phase noise's statistical properties depend on the carrier frequency, the phase noise temporal coherence indicator is determined for the considered carrier frequency on which the terminal 20 is to exchange data with a base station 30 of the RAN 11, and is determined by evaluating the phase noise temporal coherence on one or more frequencies relevant to said considered carrier frequency, for instance directly on said considered carrier frequency and/or on one or more frequencies close to said considered carrier frequency and/or on a bounded frequency band that includes said considered carrier frequency.

The phase noise temporal coherence may be evaluated by any method known to the skilled person. For instance, the statistical properties of the phase noise introduced by the terminal 20 may be determined beforehand (e.g. during the manufacturing process of the terminal 20) by e.g. calibration. Such calibration data may be stored in a non-volatile memory of the terminal 20 and may correspond to the phase noise temporal coherence indicator or may be used to determine the phase noise temporal coherence indicator. In some cases, such calibration data may be available for a plurality of different possible frequencies or bounded frequency bands in order to enable the terminal 20 to determine phase noise temporal coherence indicators for different possible carrier frequencies. In such a case, the terminal 20 may use the calibration data that is relevant to the considered carrier frequency to determine the associated phase noise temporal coherence indicator. In some cases, the terminal 20 may determine a plurality of phase noise temporal coherence indicators, which are sent to the RAN 11, relevant to different possible carrier frequencies over which the terminal 20 may exchange data with the RAN 11. Such calibration data may be used in particular when the phase noise experienced by the terminal 20 can be assumed to be introduced mainly by the components (e.g. local oscillator(s)) of the terminal 20 itself. Indeed, in such a case, the phase noise introduced by the base stations 30 may be considered to be negligible, and the phase noise temporal coherence indicator(s) determined based on such calibration data may be used for exchanging data with any base station 30 of the RAN 11.

In some embodiments, the phase noise experienced by the terminal 20 may be estimated by using radiofrequency signals received from the RAN 11, for instance based on pilot signals inserted by the RAN 11 in radiofrequency signals transmitted on the DL. The phase noise temporal coherence for a given carrier frequency may be evaluated based on a plurality of successive phase noise estimations carried out by the terminal 20 based on radiofrequency signals received from the RAN 11 on one or more frequencies relevant to the considered carrier frequency (e.g. directly on said considered carrier frequency and/or on one or more frequencies close to said considered carrier frequency and/or on a bounded frequency band which includes said considered carrier frequency). If the phase noise experienced by the terminal 20 may be considered to be introduced mainly by the terminal 20 itself, then it is possible to use radiofrequency signals received from any base station 30 of the RAN 11 (over frequencies relevant the considered carrier frequency). In turn, if the phase noise introduced by the base stations 30 is not negligible, such that the statistical properties of the phase noise experienced by the terminal 20 depend on the specific base station with which the terminal 20 is in communication, then it is better to rely on radiofrequency signals transmitted only by the specific base station 30 with which the terminal 20 is to exchange data. In other words, if the phase noise introduced by the base stations 30 is not negligible, then the phase noise temporal coherence is evaluated for a specific pair which includes the terminal 20 and the base station 30 of the RAN 11 with which the terminal 20 is to exchange data on the DL.

As discussed above, the phase noise temporal coherence indicator is representative of the temporal coherence of the phase noise experienced by the terminal 20, for the considered carrier frequency. Depending on the embodiments, the phase noise temporal coherence indicator may correspond to e.g. an estimated phase noise autocorrelation function (or an information derived therefrom such as its initial slope, its floor limit, its average value, a duration past which it becomes lower than a predetermined threshold, its value for a predetermined delay, etc.), a binary value indicating if the variation of the phase noise is fast or slow, etc.

For instance, in some embodiments, determining the phase noise temporal coherence indicator for a given carrier frequency may comprise estimating a phase noise autocorrelation function based on signals received on one or more frequencies relevant to said carrier frequency from at least one base station 30 of the RAN 11 (e.g. only the base station 30 with which the terminal 20 is to exchange data if the phase noise introduced by the base station(s) 30 is not negligible compared to the phase noise introduced by the terminal 20 itself). Generally speaking, the estimation of the phase noise autocorrelation function may use any pilot-aided (i.e. relying on pilot signals which may be different from the pilot signals inserted for short-term phase noise estimation) and/or blind (i.e. not relying on pilot signals) estimation method known to the skilled person, and the choice of a specific estimation method corresponds to a specific but non-limitative embodiment of the present disclosure.

When the phase noise autocorrelation function is estimated, the phase noise temporal coherence indicator may correspond to the estimated phase noise autocorrelation function (which is then transmitted to the RAN 11) or is determined based on said estimated phase noise autocorrelation function. In the latter case, the phase noise temporal coherence indicator may for instance be representative of an initial slope of the estimated phase noise autocorrelation function. By "initial slope", we mean the slope of the phase noise autocorrelation function $\gamma(p)$ for small values of $p$, for instance for $p = 0$. For instance, the initial slope corresponds to the value of the derivative function $\gamma'(p)$ of the phase noise autocorrelation function $\gamma(p)$ for small values of $p$, for instance $\alpha_1 = \gamma'(0)$ (with $\alpha_1 < 0$). According to another non-limitative example, the phase noise temporal coherence indicator may for instance be representative of a duration $T_1$ past which the phase noise coherence (i.e. the value of the phase noise autocorrelation function) becomes lower than a positive predetermined threshold $V_1$ (for instance $V_1 \leq 0.9$ or $V_1 \leq 0.8$). In other words, the duration $T_1$ is for instance such that:

$$\gamma(p) \leq V_1 \ \ \forall p \geq T_1$$

If the phase noise coherence does not become lower than $V_1$ (see e.g. figure 4 for lower carrier frequencies), then the duration $T_1$ may be set to an arbitrary large value indicating a large phase noise coherence time.

According to another non-limitative example, the phase noise temporal coherence indicator may for instance correspond to the value $b_1 = \gamma(p_1)$ of the phase noise autocorrelation function obtained for a predetermined delay $p_1$. According to yet another non-limitative example, the phase noise temporal coherence indicator may for instance correspond to a floor limit $\rho$ which the phase noise coherence tends to as the delay increases.

The one or more phase noise temporal coherence indicators determined by the terminal 20 are then transmitted, during step S61, to the RAN 11. For instance, the one or more phase noise temporal coherence indicators can be transmitted directly to the base station 30 with which said terminal 20 is to exchange data on the DL, or indirectly i.e. via another base station 30 of the RAN 11. Alternatively, or in combination thereof, the one or more phase noise temporal coherence indicators can be stored in a database where they can be retrieved by any base station 30 willing to exchange data with the terminal 20, etc.

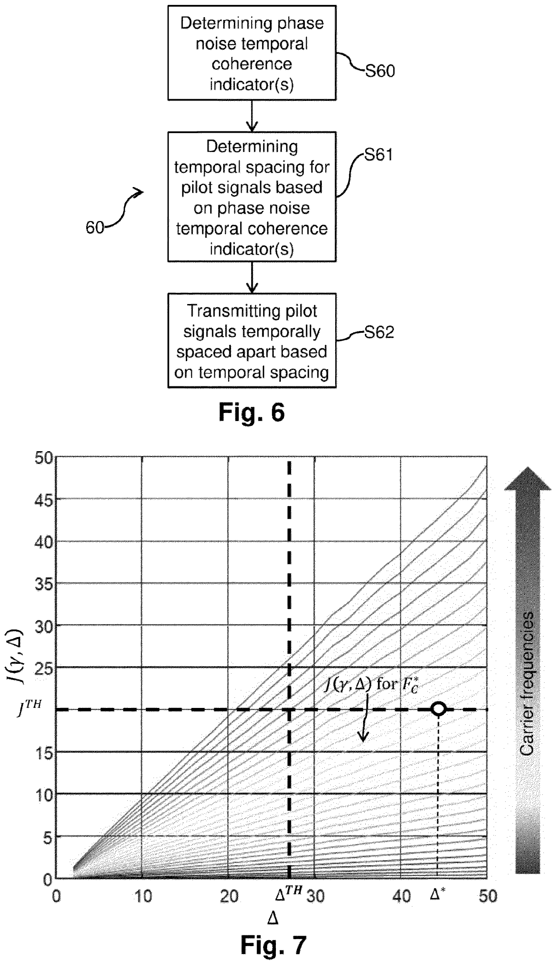

Figure 6 represents schematically the main steps of an exemplary embodiment of a wireless communication method 60 implemented by a base station 30 of the RAN 11. The wireless communication method 60 of figure 6 represents a non-limitative example of how a phase noise temporal coherence indicator of a terminal 20 may be used at a base station 30 to improve phase noise mitigation at the terminal 20, thereby improving wireless communication performance between the base station 30 and the terminal 20.

As illustrated by figure 6, the wireless communication method 60 comprises a step S60 of determining one or more phase noise temporal coherence indicator for the terminal 20.

For instance, determining one or more phase noise temporal coherence indicators by the base station 30, for the terminal 20, may consist in receiving (directly or indirectly) said phase noise temporal coherence indicator(s) from said terminal 20 (transmitted by the terminal 20 during step S51 of the wireless communication method 50 of figure 5). In such a case, said phase noise temporal coherence indicator(s) are received during step S60 by the wireless communication unit 32 of the base station 30.

In other examples, determining one or more phase noise temporal coherence indicators by the base station 30, for the terminal 20, may consist in retrieving said phase noise temporal coherence indicator(s) from a database in which they have been previously stored by the RAN 11.

In yet other examples, the one or more phase noise temporal coherence indicators for the terminal 20 may be estimated by the base station 30 based on UL (pilot and/or data) signals transmitted by the terminal 20 to the RAN 11.

As illustrated by figure 6, the wireless communication method 60 comprises a step S61 of determining, by the processing circuit 31 of the base station 30, a temporal spacing for pilot signals to be transmitted on the DL by the base station 30 to the terminal 20. The temporal spacing of the pilot signals is determined based on the phase noise temporal coherence indicator determined for said terminal 20 for the carrier frequency on which the base station 30 is to exchange data with said terminal 20. The pilot signals are to be used by the terminal 20 to estimate the phase noise affecting the received signals, and step S61 aims at adjusting the temporal spacing between the pilot signals to the phase noise temporal coherence of the phase noise experienced on the DL.

As illustrated by figure 6, the wireless communication method 60 comprises then a step S62 of transmitting signals to the terminal 20, by the wireless communication unit 32 of the base station 30. Said transmitted signals include data signals and phase noise estimation pilot signals. Said phase noise estimation pilot signals are temporally spaced apart based on the temporal spacing determined for said terminal 20.

For instance, the temporal spacing determined during step S61 may correspond directly to the temporal spacing that is to be used between the phase noise estimation pilot signals, and the phase noise estimation pilot signals are for instance inserted periodically in the signals transmitted during step S62. In another example, the temporal spacing determined during step S61 may correspond to a maximum temporal spacing that is allowed for temporally spacing apart the phase noise estimation pilot signals, and the phase noise estimation pilot signals are for instance inserted such that the temporal spacing between two successive phase noise estimation pilot signals is not greater than the temporal spacing determined during step S62.

It is emphasized that the temporal spacing determined during step S61 depends on the carrier frequency on which the signals are transmitted to the terminal 20 during step S62 and depends on the terminal 20 itself since the phase noise autocorrelation function may vary from a terminal 20 to another. Hence, the base station 30 may end up using different temporal spacings for the phase noise estimation pilot signals when exchanging data with different terminals 20 on the same carrier frequency.

During step S61, the temporal spacing is adjusted to the temporal coherence of the phase noise experienced in the DL by the terminal 20, in order to generally transmit more frequently phase noise estimation pilot signals when the coherence time of the phase noise is short (i.e. the phase noise is expected to vary rapidly) than when the coherence time of the phase noise is large (i.e. the phase noise is expected to vary slowly). Hence, during step S61, the base station 30 typically selects a temporal spacing that is lower in response to the received phase noise temporal coherence indicator indicating a short coherence time than in response to the received phase noise temporal coherence indicator indicating a large coherence time. For instance, it is possible to establish beforehand a LUT which is stored in a non-volatile memory of the base station 30, wherein said LUT comprises different temporal spacings associated to respective different phase noise temporal coherence indicators. Then the temporal spacing to be used may be determined for the considered terminal 20 by retrieving from the LUT the temporal spacing that is associated to the phase noise temporal coherence indicator determined for (e.g. received from) said terminal 20. It is also possible to store a plurality of such LUTs, associated to respective different frequencies or frequency bands, and step S61 uses the LUT that is associated to the carrier frequency that is to be used during step S62, for sending signals to the terminal 20 (i.e. determined for the frequency that is the closest to the considered carrier frequency or determined for the frequency band that includes said considered carrier frequency).

In some embodiments, the temporal spacing is determined at the base station 30 by using a predetermined performance function representative of a phase noise estimation performance, at the terminal 20, as a function of the temporal spacing between the phase noise pilot signals. Such a performance function may for instance assume that a specific phase noise estimation method is used at the terminal 20. Any phase noise estimation method using phase noise estimation pilot signals may be considered, and the choice of a specific method corresponds to a specific but non-limitative embodiment of the present disclosure. In the sequel, we assume in a non-limitative manner that the performance function assumes that finite impulse response, FIR, minimum mean square error, MMSE phase noise estimation is performed at the terminal 20 (e.g. Wiener filter-based phase noise estimation).

We now present a non-limitative example of performance function that can be used to determine the temporal spacing to be used during step S61. To this end, we assume the existence of $N_P$ pilot signals (e.g. symbols of a DFT-s-OFDM symbol) at positions $p_1, \dots, p_{NP}$ uniformly distributed in the transmitted signals with a temporal spacing $\Delta$, i.e. $p_{k+1} - p_k = \Delta$ for all $k$. We consider here an estimation with a FIR-MMSE filter:

$$\hat{\underline{\psi}}_n = \underline{w}_n \tilde{\underline{\psi}}_p^T$$

wherein:

- $\hat{\underline{\psi}}_n$ corresponds to the phase noise estimated for the $n$th data signal,
- $\tilde{\psi}_{pk}$ corresponds to a phase noise rough estimation for the $k$th pilot signal $p_k$, for instance estimated as $\tilde{\psi}_{p,k} = y_{pk}/x_{pk}$,

and $\tilde{\underline{\psi}}_p = \left[ \tilde{\psi}_{p_1} \dots \tilde{\psi}_{p_{N_p}} \right]$,

- $\underline{w}_n = [w_{n,1} \dots w_{n,NP}]$ is the FIR-MMSE filter.

According to the formalism on the FIR-MMSE, the goal is to minimize the local cost function $J_n = \mathbb{E}\left[ \left| \hat{\underline{\psi}}_n - \psi_n \right|^2 \right]$ at each $n$th data signal ("local" means for a specific data signal), and the associated optimal answer is given by:

$$\underline{w}_n^* = R^{-1} \underline{\gamma}_n$$

wherein:

- $R$ is the autocorrelation matrix such that $R_{i,j} = \chi(p_i - p_j)$,

- $\underline{\gamma}_n = [\gamma_{n,1} \dots \gamma_{n,NP}]$ is the autocorrelation vector between the $n^{th}$ data signal and all the pilot signals, i.e. $\gamma_{n,j} = \gamma(n - p_j)$.

Hence, it can be seen that these quantities can be derived from the phase noise autocorrelation function $\gamma$ that may be estimated for the terminal 20. It is emphasized that the phase noise estimation using FIR-MMSE filtering is a short-term phase noise estimation (i.e. it aims at estimating instantaneous phase noise realizations $\psi_n$) while the estimation of the phase noise autocorrelation function $\gamma$ is a long-term estimation of 2nd order statistics of the phase noise.
Assuming such a FIR-MMSE filter-based phase noise estimation at the terminal 20, the performance of the short-term phase noise estimation is fully determined by the distribution of the pilot signals (i.e. the temporal spacing $\Delta$ used) and by the phase noise autocorrelation function $\gamma$ of the terminal 20. In other words, $J_n = J_n(\gamma, \Delta)$. Of course, the phase noise autocorrelation function $\gamma$ depends also on e.g. the considered carrier frequency (and on the subcarrier spacing in an OFDM or DFT-s-OFDM wireless communication system 10).
At the base station 30, the phase noise autocorrelation function $\gamma$ of the terminal 20 may for instance correspond to the phase noise temporal coherence indicator determined during step S60, or it may be determined based on said determined phase noise temporal coherence indicator. For instance, a parametric model may be used at the base station 30 to model the phase noise autocorrelation function, and the determined phase noise temporal coherence indicator may correspond to the parameter value(s) to be used in the parametric model. For instance, the parametric model may correspond to an exponentially decaying function $((1 - \rho)e^{-\lambda t} + \rho)$ which decreases from 1 to a floor limit $\rho$, and the phase noise temporal coherence indicator determined (e.g. received from the terminal 20) may include the decay value $\lambda$ and the floor limit $\rho$. Of course, other parametric models may be considered in other examples. According to another non-limitative example, the parametric model may correspond to the following function:

$$\begin{cases} (1 + a_1 t) \text{ if } 0 \leq t \leq (\rho - 1)/a_1 \\ \quad \rho \text{ if } t > (\rho - 1)/a_1 \end{cases}$$

wherein $\alpha_1 < 0$ corresponds e.g. to the initial slope discussed above.
In some embodiments, assuming that the base station 30 has determined the phase noise autocorrelation function $\gamma$ of the terminal 20, the performance function may be defined as a global cost function $J$ which combines the local cost functions $J_n$, for instance expressed as:

$$J(\gamma, \Delta) = \sum_{n=1}^{N} J_n(\gamma, \Delta)$$

wherein $N$ corresponds to the number of data signals in the signals transmitted during step S62. According to other examples, the global cost function $J$ may be expressed as:

$$J(\gamma, \Delta) = \max_n \{J_n(\gamma, \Delta)\}$$

or as:

$$J(\gamma, \Delta) = \prod_{n=1}^{N} J_n(\gamma, \Delta)$$

or more generally as:

$$J(\gamma, \Delta) = H\big(J_1(\gamma, \Delta), \cdots, J_N(\gamma, \Delta)\big)$$

wherein $H$ is a predetermined function.
Accordingly, the temporal spacing $\Delta^*$ to be used during step S62 may be determined as follows:

$$\Delta^* = \arg\min_\Delta \{J(\gamma, \Delta)\}$$

However, minimizing as such the previous expression would lead to always selecting the lowest possible value for the temporal spacing $\Delta^*$. In some embodiments, the determination of the optimal temporal spacing $\Delta^*$ may be carried out by further considering a minimum phase noise performance requirement that needs to be satisfied. In the non-limitative example considered herein, since the global cost function $J$ represents the phase noise estimation error, the minimum phase noise performance requirement may be defined by a maximum phase noise estimation error $J^{TH}$ that is allowed. In other words, the temporal spacing $\Delta^*$ should preferably ensure that the following minimum phase noise performance requirement is satisfied:

$$J(\gamma, \Delta^*) \leq J^{TH}$$

In such a case, it is possible to search for the temporal spacing $\Delta^*$ that minimizes the overhead represented by the insertion of the phase noise estimation pilot signals, i.e. that maximizes the temporal spacing. Hence, the determination may be carried out by searching for the greatest temporal spacing for which the phase noise estimation error remains below $J^{TH}$. For instance, this can be expressed as:

$$\Omega = \{\Delta \text{ s.t. } J(\gamma, \Delta) \leq J^{TH}\}$$

$$\Delta^* = \arg \max_{\Omega} \{J(\gamma, \Delta)\}$$

In some embodiments, it is also possible to consider a minimum temporal spacing $\Delta^{TH}$ that is allowed for spacing apart the phase noise estimation pilot signals and/or a maximum temporal spacing $\Delta^{MAX}$ that is allowed for spacing apart the phase noise estimation pilot signals. This can be done by considering for instance a set $\Omega$ defined as follows:

$$\Omega = \{\Delta \text{ s.t. } J(\gamma, \Delta) \leq J^{TH} \text{ and } \Delta^{TH} \leq \Delta \leq \Delta^{MAX}\}$$

Figure 7 represents examples of performance functions $J(\gamma, \Delta)$ determined for different carrier frequencies, by considering the 3GPP phase noise simulation model. As expected, for a given carrier frequency, the performance function $J(\gamma, \Delta)$, which represents the phase noise estimation error, increases with the temporal spacing $\Delta$ (i.e. the phase noise estimation performance decreases with the temporal spacing $\Delta$ for a given carrier frequency). For a given temporal spacing $\Delta$, the performance function $J(\gamma, \Delta)$ increases with the carrier frequency (i.e. the phase noise estimation performance decreases with the carrier frequency for a given temporal spacing $\Delta$). In figure 7, it is assumed that the temporal spacing $\Delta^*$ to be used during step S62 is determined by maximizing $J(\gamma, \Delta)$ under the above mentioned constraints $\Delta^{TH}$ (i.e. $\Delta^{TH} \leq \Delta$) and $J^{TH}$ (i.e. $J(\gamma, \Delta) \leq J^{TH}$). Figure 7 shows the optimal temporal spacing $\Delta^*$ determined in such a case for a specific carrier frequency $F_C^*$, which yields in this example the maximum allowed phase noise estimation error $J^{TH}$.

The terminal 20 then receives the signals transmitted by the base station 30 during step S62. The pilot signals are used by the terminal 20 to estimate the phase noise affecting the received data signals and the estimated phase noise is compensated on the received data signals, to improve the wireless communication performance. Thanks to the adjustment of the temporal spacing of the pilot signals to the temporal coherence of the phase noise experienced by the terminal 20, a tradeoff can be achieved between the phase noise mitigation performance and the overhead represented by the phase noise estimation pilot signals, thereby enhancing the wireless communication performance.

It is emphasized that the present disclosure is not limited to the above exemplary embodiments. Variants of the above exemplary embodiments are also within the scope of the present disclosure.

For instance, in the examples in which the base station 30 uses a performance function for determining a temporal spacing for the phase noise estimation pilot signals, it has been mainly considered that FIR-MMSE filter-based phase noise estimation is performed at the terminal 20. Of course, other (short-term) phase noise estimation methods may be considered at the terminal 20 and the corresponding performance functions may be determined in a similar manner by the skilled person. For instance, least-squares, LS, or linear regression phase noise estimation may also be performed at the terminal 20.

Also, the present disclosure has been given by considering mainly the case of phase noise mitigation in a DL from a base station 30 to a terminal 20. However, the present disclosure may also be applied for phase noise mitigation in the UL. In such a case, the wireless communication method 50 of figure 5 is implemented by the base station 30 while the wireless communication method 60 of figure 6 is implemented by the terminal 20.

**Claims**

1.  A wireless communication method (50), implemented by a terminal (20) in a wireless communication system (10), for exchanging data with a radio access network (11) of said wireless communication system, said method comprising:

    - (S50) determining a phase noise temporal coherence indicator representative of a temporal coherence of a phase noise affecting baseband signals obtained from radiofrequency signals received by the terminal,
    - (S51) transmitting said phase noise temporal coherence indicator to the radio access network of the wireless communication system.

2.  The method (50) according to claim 1, wherein determining the phase noise temporal coherence indicator comprises estimating a phase noise autocorrelation function of the phase noise based on signals received from at least one base station (30) of the radio access network (11), wherein the phase noise temporal coherence indicator corresponds to the estimated phase noise autocorrelation function or is determined based on said estimated phase noise autocorrelation function.

3.  The method (50) according to claim 2, wherein the phase noise temporal coherence indicator is representative of at least one among the following:

    - an initial slope of the estimated phase noise autocorrelation function,
    - a binary value indicating a variation speed of the phase noise,
    - a duration past which the phase noise coherence becomes lower than a threshold,
    - a value of the estimated phase noise autocorrelation function for a predefined delay,
    - a floor limit which the estimated phase noise autocorrelation function tends to,
    - an average value of the estimated phase noise autocorrelation function.

4.  The method (50) according to claim any one of the preceding claims, wherein determining the phase noise temporal coherence indicator comprises retrieving calibration data stored in a non-volatile memory of the terminal (20), wherein the phase noise temporal coherence indicator corresponds to the calibration data or is determined based on said calibration data.

5.  A computer program product comprising instructions which, when executed by at least one processor, configure said at least one processor to carry out a method (50) according to any one of claims 1 to 4.

6.  A terminal (20) in a wireless communication system (10), said terminal comprising a processing circuit (21) and a wireless communication unit (22) which are configured to carry out a wireless communication method (50) according to any one of claims 1 to 4.

7.  A wireless communication method (60), implemented by a base station (30) in a wireless communication system (10), for exchanging data with a terminal (20) of said wireless communication system, said method comprising:

    - (S60) determining a phase noise temporal coherence indicator for the terminal, representative of a temporal coherence of a phase noise affecting baseband signals obtained from radiofrequency signals received by said terminal,
    - (S61) determining, for said terminal and based on the determined phase noise temporal coherence indicator, a temporal spacing for pilot signals to be transmitted by the base station to said terminal,
    - (S62) transmitting signals to the terminal, said signals including data signals and pilot signals, said pilot signals being temporally spaced apart based on the temporal spacing determined for said terminal.

8.  The method (60) according to claim 7, wherein determining the phase noise temporal coherence indicator for the terminal comprises one among the following:

    - receiving from said terminal the phase noise temporal coherence indicator transmitted according to any one of claims 1 to 4,
    - estimating the phase noise temporal coherence indicator for said terminal based on signals received from said terminal,
    - retrieving, from a database, the phase noise temporal coherence indicator for said terminal.

9. The method (60) according to any one of claims 7 to 8, wherein the temporal spacing is adjusted to the temporal coherence of the phase noise of the terminal, by selecting a temporal spacing that is lower in response to the determined phase noise temporal coherence indicator indicating a short coherence time than in response to the determined phase noise temporal coherence indicator indicating a large coherence time.

10. The method (60) according to any one of claims 7 to 9, wherein the temporal spacing is determined by using a performance function representative of a phase noise estimation performance, at the terminal, as a function of the temporal spacing between the pilot signals.

11. The method (60) according to claim 10, wherein the determination of the temporal spacing is carried out by determining the greatest temporal spacing for which the phase noise estimation performance satisfies a minimum phase noise performance requirement.

12. The method (60) according to any one of claims 10 to 11, wherein the determination of the temporal spacing is carried out by considering a minimum temporal spacing allowed for spacing apart the pilot signals and/or a maximum temporal spacing allowed for spacing apart the pilot signals.

13. The method (60) according to any one of claims 10 to 12, wherein the performance function is representative of a phase noise estimation performance when performing finite impulse response, FIR, minimum mean square error, MMSE phase noise estimation at the terminal.

14. The method (60) according to any one of claims 7 to 8, wherein a look-up table, LUT, is stored in a non-volatile memory of the base station, said LUT comprising different temporal spacings associated to respective different phase noise temporal coherence indicators, and wherein determining the temporal spacing for the terminal comprises retrieving from the LUT the temporal spacing associated to the phase noise temporal coherence indicator determined for the terminal.

15. A computer program product comprising instructions which, when executed by at least one processor, configure said at least one processor to carry out a method (60) according to any one of claims 7 to 14.

16. A base station (30) in a wireless communication system (10), said base station comprising a processing circuit (31) and a wireless communication unit (32) which are configured to carry out a wireless communication method (60) according to any one of claims 7 to 14.

17. A wireless communication system (10) comprising at least one terminal (20) according to claim 6 and at least one base station (30) according to claim 16.

18. The wireless communication system (10) according to claim 17, using discrete Fourier transform-spread orthogonal frequency division multiplexing, DFT-s-OFDM.

- 12 -

30

11

30

30

10

20

20

20

**Fig. 1**

20

22

21

**Fig. 2**

30

32

31

**Fig. 3**

**Fig. 4**

**Fig. 5**

**Fig. 6**

**Fig. 7**

Europäisches
Patentamt

European
Patent Office

Office européen
des brevets

# EUROPEAN SEARCH REPORT

Application Number

EP 23 30 5597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2017/280444 A1 (DA SILVA CLAUDIO [US] ET AL) 28 September 2017 (2017-09-28)<br>* abstract *<br>* paragraphs [0011] – [0081] *<br>* figures 1-7 *<br>----- | 1-8, 10-18<br><br>9 | INV.<br>H04B1/10<br>H04L27/26 |
| X<br><br>A | US 10 439 663 B2 (QUALCOMM INC [US]) 8 October 2019 (2019-10-08)<br>* abstract *<br>* column 3, line 65 – column 22, line 29 *<br>* figures 1-18 *<br>----- | 1-8, 10-18<br><br>9 | |
| A | US 2022/150010 A1 (PICK JACOB [IL] ET AL) 12 May 2022 (2022-05-12)<br>* abstract *<br>* paragraphs [0026] – [0126] *<br>* figures 1-9 *<br>----- | 1-18 | |
| | | | TECHNICAL FIELDS SEARCHED (IPC) |
| | | | H04B<br>H04L |

The present search report has been drawn up for all claims

| Place of search | Date of completion of the search | Examiner |
|---|---|---|
| Munich | 29 September 2023 | Aquilani, Dario |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

## ANNEX TO THE EUROPEAN SEARCH REPORT
## ON EUROPEAN PATENT APPLICATION NO.

EP 23 30 5597

29-09-2023

| Patent document cited in search report | | | Publication date | Patent family member(s) | | | Publication date |
|---|---|---|---|---|---|---|---|
| US 2017280444 | A1 | | 28-09-2017 | US | 2017280444 | A1 | 28-09-2017 |
| | | | | WO | 2017165006 | A2 | 28-09-2017 |
| US 10439663 | B2 | | 08-10-2019 | AU | 2017246210 | A1 | 13-09-2018 |
| | | | | BR | 112018070447 | A2 | 05-02-2019 |
| | | | | CA | 3016608 | A1 | 12-10-2017 |
| | | | | CN | 109075937 | A | 21-12-2018 |
| | | | | EP | 3440799 | A1 | 13-02-2019 |
| | | | | ES | 2881812 | T3 | 30-11-2021 |
| | | | | US | 2017294926 | A1 | 12-10-2017 |
| | | | | WO | 2017176602 | A1 | 12-10-2017 |
| US 2022150010 | A1 | | 12-05-2022 | US | 2022150010 | A1 | 12-05-2022 |
| | | | | WO | 2022099239 | A1 | 12-05-2022 |

EPO FORM P0459

For more details about this annex : see Official Journal of the European Patent Office, No. 12/82